# EUROPEAN PATENT APPLICATION

(11) **EP 4 431 345 A1**
(43) Date of publication of application: **18.09.2024**
(21) Application number: 22892713.3
(22) Date of filing: 04.11.2022
(51) Int. Cl.: B60R 21/207, B60R 21/2338, B60R 21/262

(54) **VEHICULAR SIDE AIRBAG DEVICE**

(30) Priority: 09.11.2021 JP 2021182641
(71) Applicant: Autoliv Development AB, 44783 Vargarda (SE)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Schön, Thilo
(86) International application number: PCT/JP2022/041202
(87) International publication number: WO 2023/085214

(57) **Abstract**

PROBLEM

To provide a vehicular side airbag device enabling improving occupant restraint performance of the airbag cushion with a simple configuration.

RESOLUTION MEANS

An airbag module 106 includes an airbag cushion 108 in a bag shape and in a prescribed rolled or folded storage configuration and an inflator 110 that supplies gas to the airbag cushion 108, and is mounted in a side frame 134 of a seatback 104. The airbag cushion 108 includes a main chamber 112 that expands and deploys from the side frame 134 to the side of an occupant seated in a seat 102 and a sub-chamber 114 that expands and deploys from the main chamber 112 to the occupant side. The edge 116 of the sub-chamber 114 on the occupant side is curved and concave toward the main chamber side.

## Description

### TECHNICAL FIELD

The present invention relates to a vehicular side airbag device for restraining an occupant seated in a vehicle seat.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. There are various types of airbag devices depending on the installation site and application. For example, an airbag 16 described in FIG. 2A of Patent Document 1 is provided on the interior side on a seatback 14 in the vehicle width direction and provides restraint near a shoulder of the occupant.

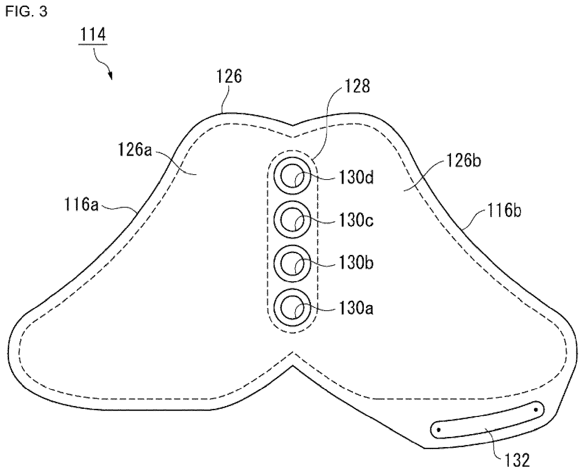

In the technology in Patent Document 1, an upper panel 18 and lower panel 20 are provided on the upper part and lower part of the airbag 16. This upper panel 18 and lower panel 20 are connected to a retractor 52 via a strap 54 and functioning of the retractor 52 enables pulling the airbag 16 to the seatback side. Thereby, as depicted in FIG. 3B, a valley 24 is formed in the airbag 16 between a first portion 64 and a second portion 66, and this valley 24 is able to restrain the shoulder of the occupant.

### RELATED ART DOCUMENTS

### Patent Documents

[Patent Document 1] U.S. Patent No. 10960841 Specification

### SUMMARY OF THE INVENTION

### PROBLEM TO BE SOLVED BY THE INVENTION

With airbag devices, reducing the amount of movement of the occupant is an important evaluation item for lowering injury values of an occupant. In addition to conventional methods of increasing dimensions of the airbag cushion and raising pressure, restricting movement of the airbag 16 using the upper panel 18 and a retractor 52 as in Patent Document 1 can also be used to achieve a reduction in the amount of movement of the occupant. However, the technology using the upper panel 18 or retractor 52 of Patent Document 1 has many elements added to the device configuration, and so may not be adopted due to installation location and cost constraints. Similarly, increasing dimensions or raising pressure of the airbag cushion cannot be easily adopted.

In light of the foregoing, an object of the present invention is to provide a vehicular side airbag device that enables improving occupant restraint performance of the airbag cushion using a simple configuration.

### MEANS FOR SOLVING THE PROBLEM

In order to resolve the problem described above, a typical configuration for a vehicular side airbag device according to the present invention has an airbag module mounted in a side frame of a vehicle seat seatback, wherein the airbag module includes:
an airbag cushion in a bag shape with a prescribed rolled or folded storage configuration, and
an inflator for supplying gas to the airbag cushion;
the airbag cushion includes:
   a main chamber that expands and deploys from the side frame to the side of the occupant seated in the vehicle seat, and
   a sub-chamber that expands and deploys protruding from the main chamber toward the occupant side; and
   an edge of the sub-chamber on the occupant side is curved and is concave towards the main chamber.

With the airbag cushion described above, an edge of the sub-chamber on the occupant side is curved and recessed, and is thereby able to provide restraint along the body of the occupant. In addition, with the configuration described above, the sub-chamber is broadly supported by the main chamber, enabling efficient absorption of energy when restraining the occupant. Therefore, for example, with the configuration described above, the head of the occupant can be restrained using the sub-chamber. Rotational behavior of the head is known to raise injury values; therefore, the configuration described above that suppresses rotational behavior of the head using the sub-chamber enables a preferable reduction of the injury value of the occupant with a simple configuration.

The main chamber may expand and deploy from the side frame, spreading vertically and to the front and back along a first virtual plane, and the sub-chamber may expand and deploy along a second virtual plane that intersects with the first virtual plane.

With the configuration described above, where the sub-chamber expands and deploys intersecting with the main chamber, a load applied to the sub-chamber can be efficiently received by the main chamber, enabling suitable restraint of the occupant.

The second virtual plane described above may be orthogonal to the first virtual plane.

With the configuration described above, where the sub-chamber expands and deploys orthogonal to the main chamber, even if the sub-chamber is pushed in by the occupant, the load can efficiently be absorbed by the main chamber so the occupant can be received without moving from the range of the airbag cushion.

The edge of the sub-chamber on the occupant side described above may be a curved surface that is concave to the main chamber side.

With the configuration described above, the sub-chamber forming a curved surface that is concave enables efficient restraint along the body of the occupant.

The airbag cushion described above may further include a tether from a portion of the main chamber above the sub-chamber to the sub-chamber.

With the tether described above, the sub-chamber can be pulled toward and supported on the main chamber, retaining the orientation of the sub-chamber, and thereby enabling the sub-chamber to efficiently restrain the occupant.

The main chamber may expand and deploy by receiving gas from the inflator and the sub-chamber may expand and deploy by receiving gas from the main chamber.

This configuration enables the main chamber and the sub-chamber to suitably expand and deploy using gas from the inflator.

The airbag cushion may further include an inner tube inside the main chamber, into which the inflator is inserted, and the inner tube may include a plurality of inner vents for discharging gas received from the inflator, where at least one of the plurality of inner vents is connected to the sub-chamber.

With this configuration, the inner tube is used to supply gas directly to the sub-chamber; thereby enabling restraint of the occupant through rapid expansion and deployment of the sub-chamber.

The sub-chamber described above may be inclined from the back to the front so that a front end portion of the sub-chamber is positioned lower than a rear end portion in the front-to-back direction of the vehicle seat.

In an emergency, the torso of the occupant readily falls forward centered on the waist; thereby, the head of the occupant also readily moves forward and downward. With the configuration described above, the sub-chamber being inclined downward to the front enables the sub-chamber to continue to restrain the head of the occupant before and after movement of the occupant during an emergency.

### EFFECT OF THE INVENTION

The present invention can provide a vehicular side airbag device that can improve occupant restraint performance of the airbag cushion with a simple configuration.

### BRIEF DESCRIPTION OF THE DRAWINGS

FIG. 1 is a diagram depicting a vehicular side airbag device according to an embodiment of the present invention.
FIG. 2 is a diagram depicting the airbag cushion of FIG. 1(b) as viewed from various directions.
FIG. 3 is a diagram depicting a state of the sub-chamber of FIG. 2(b) spread out on a flat surface.
FIG. 4 is a diagram depicting the airbag module in FIG. 1(b) from various directions.
FIG. 5 is a diagram depicting the side airbag device of FIG. 1(b) and an occupant.
FIG. 6 is a diagram depicting Modified Example 1 of the airbag cushion in FIG. 2.
FIG. 7 is a diagram depicting Modified Example 2 of the airbag cushion of FIG. 2(b).
FIG. 8 is a diagram depicting Modified Example 3 of the airbag cushion in FIG. 2.
FIG. 9 is a diagram depicting Modified Example 4 of the airbag cushion in FIG. 2.
FIG. 10 is a diagram depicting the airbag cushion corresponding to FIG. 5.
FIG. 11 is a diagram depicting Modified Example 5 of the airbag cushion in FIG. 2.
FIG. 12 is a diagram depicting the airbag cushion of FIG. 11(b) and an occupant.
FIG. 13 is a diagram depicting Modified Example 6 of the airbag cushion in FIG. 2.
FIG. 14 is a diagram depicting Modified Example 7 of the airbag cushion in FIG. 2.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

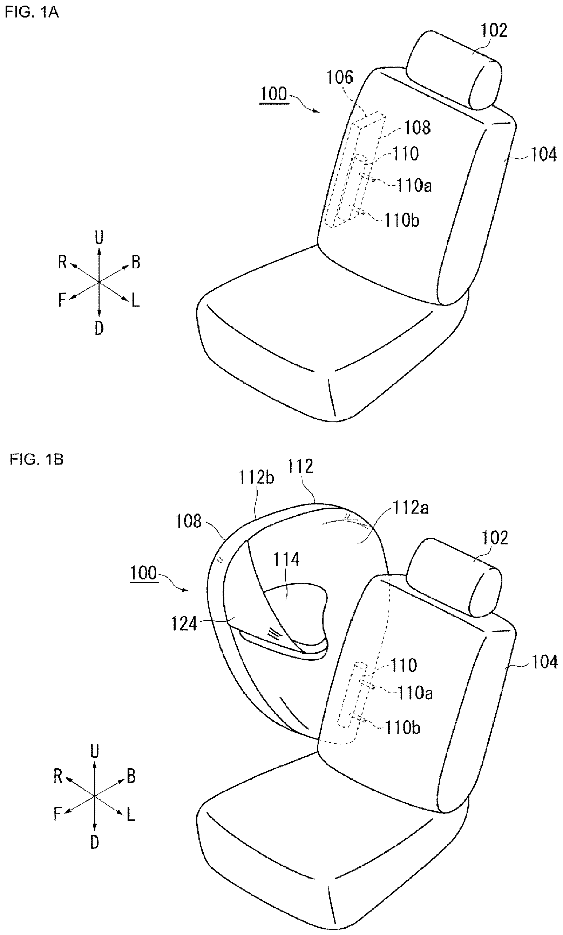

FIG. 1 is a diagram depicting the vehicular side airbag device (hereinafter, side airbag device 100) according to an embodiment of the present invention. FIG. 1(a) is a diagram depicting a state of the side airbag device 100 before activation. In FIG. 1(a) and FIG. 1(b), the side airbag device 100 and a seat 102 on the left side in the front row to which the side airbag device 100 is applied are depicted from the left side of the vehicle in the width direction, in other words from outside (outside vehicle) in the vehicle width direction.

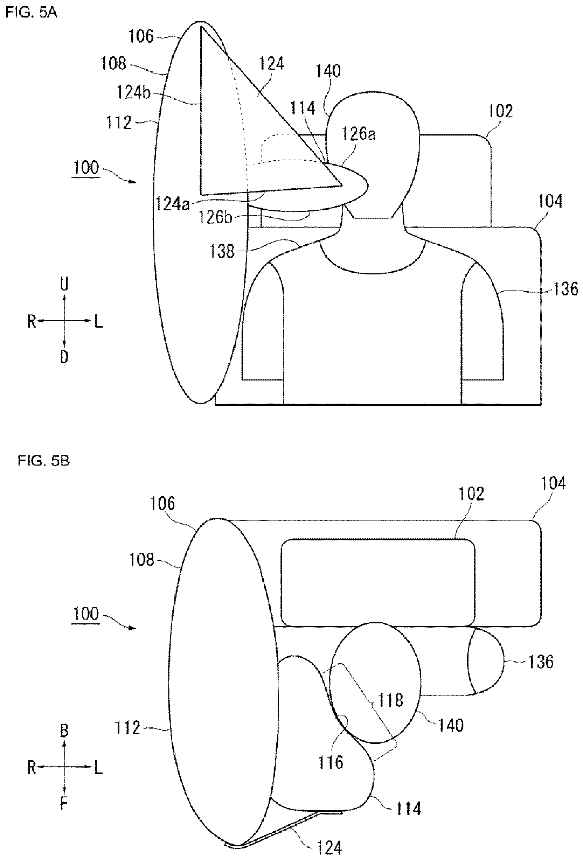

In the present embodiment, when an occupant 136 (see FIG. 5(a)) is sitting in the seat 102 with a regular posture, the direction the occupant 136 is facing is defined as forward, the opposite direction is backward, the right hand side of the occupant 136 is right direction and the left hand side of the occupant 136 is left direction. Furthermore, when the occupant 136 is seated in a regular posture, the direction towards the head of the occupant 136 is referred to as up, and the direction towards the legs of the occupant 136 is referred to as down. Also, in the drawings used in the description below, as necessary, the front, back, left, right, up, and down directions with reference to the occupant 136 in a regular position described above are illustrated by arrows F (Forward), B (Back), L (Left), R (Right), U (up), and D (down).

As depicted in FIG. 1(a), an airbag module 106 provided in the side airbag device 100 of the present embodiment is equipped in a seatback 104 of the seat 102 on the inside (interior side) in the vehicle width direction. The airbag module 106 includes an airbag cushion 108 for restraining the occupant and an inflator 110 for supplying gas to the airbag cushion 108.

In the present embodiment, as viewed from the occupant 136 (FIG. 5(a)) sitting in the seat 102 on the left side in the front row, the left side (outside vehicle) in the vehicle width direction is the side close to the collision, the so-called near side. On the other hand, the right side (vehicle interior) in the vehicle width direction as viewed from the occupant of seat 102 is far from the collision, the so-called far side. The airbag module 106 is installed in the far side of the seatback 104.

The airbag cushion 108 is a bag shaped member that can be expanded by gas and that expands and deploys in an emergency such as when the vehicle is in a collision, thus restraining the occupant 136 seated in the seat 102 (see FIG. 5(a) and the like). The airbag cushion 108 is in a rolled or folded stowed state prior to activation and is stowed in a side part of the seatback 104 on the vehicle interior side. In a stowed state, a short cover or the like covers the airbag cushion 108 so the airbag cushion is not visible from the outside.

The inflator 110 is a gas generating device and in this embodiment, a cylindrical type (cylinder shape) is used. The inflator 110 is encased to the bottom rear of a main chamber 112, described below, of the airbag cushion 108, with the longitudinal direction thereof aligned with the vertical direction of the seatback 104. The inflator 110 is electrically connected to the vehicle side, activates upon receipt of a signal resulting from detection of a collision from the vehicle, and supplies gas to the airbag cushion 108.

Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 110.

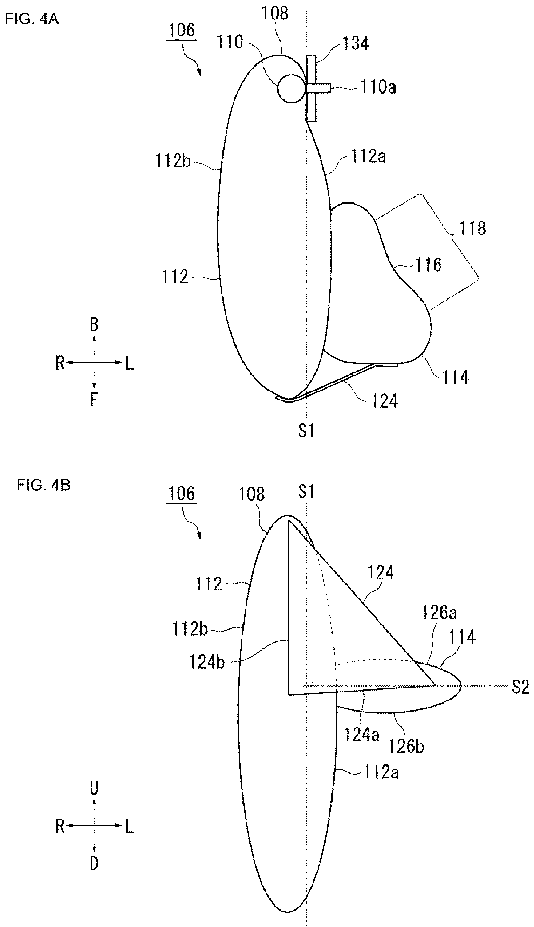

The inflator 110 is provided with two stud bolts 110a and 110b, spaced apart in a longitudinal direction thereof. The stud bolts 110a and 110b are exposed externally through the base material of the airbag cushion 108 and are fastened and secured to a side frame 134 (see FIG. 4(a)) of the seatback 104. The stud bolts 110a and 110b are fastened to the seatback 104 through the airbag cushion 108 and the airbag cushion 108 is also mounted to the seatback 104.

FIG. 1(b) is a diagram depicting a state after expansion and deployment of the airbag cushion 108 of FIG. 1(a). When the side airbag device 100 detects a far side collision via various sensors and a prescribed Electronic Control Unit (ECU), the side airbag device activates the airbag module 106 provided on the far side.

The inflator 110 ejects gas based on an activation signal sent from the ECU described above or the like. Using gas from the inflator 110, the airbag cushion 108 pushes the skin of the seatback 104 out of the way and expands and deploys into the cabin space.

The airbag cushion 108 of the present embodiment is composed of a broad shaped main chamber 112, a sub-chamber 114 that protrudes from the main chamber 112 toward the occupant side, and an external tether 124 for retaining the orientation of the sub-chamber 114.

The main chamber 112 constitutes a main portion of the airbag cushion 108 and expands and deploys with an overall flat shape. The outer surface of the main chamber 112 includes a main panel 112a positioned on the left side in the vehicle width direction, or the occupant side and a main panel 112b on the right side in the vehicle width direction, or the side opposite the occupant. The main panels 112a and 112b are made from a base material and are overall formed in a bag shape by sewing or adhering. Note that main chamber 112 can also be formed using a OPW (One-Piece Woven) textile or the like.

The sub-chamber 114 expands and deploys protruding from above and to the front of the occupant side of the main chamber 112 and protrudes to the occupant side. The sub-chamber 114 of the present embodiment functions so as to restrain a head 140 of the occupant 136 (see FIG. 5(a)).

The external tether 124 is a triangular shaped fabric member that passes over the front and upper part of the main chamber 112 to the front of the sub-chamber 114. The external tether 124 can be formed of the same material as the main panel 112a and the like.

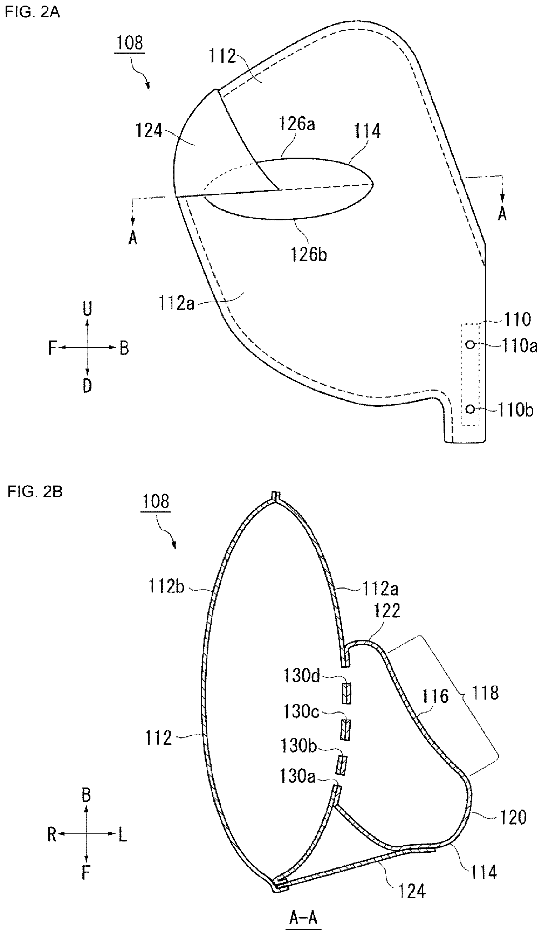

FIG. 2 is a diagram depicting the airbag cushion 108 of FIG. 1(b) as viewed from various directions. FIG. 2(a) is a diagram depicting the airbag cushion 108 of FIG. 1(b) from the interior side in the vehicle width direction. The main chamber 112 has the inflator 110 encased in the bottom rear part thereof and directly receives gas from the inflator 110 for expansion and deployment.

FIG. 2(b) is a cross-sectional view of the airbag cushion 108 of FIG. 1(b) along line A-A. The sub-chamber 114 is connected to the main panel 112a on the occupant side of the main chamber 112 and expands and deploys from the main chamber 112, protruding toward the occupant side.

An edge 116 of the sub-chamber 114 on the occupant side is concave curved toward the main chamber 112 side forming a curved part 118. Here, a front side end part 120 of the sub-chamber 114 has more of a protruding shape to the occupant side (right side in FIG. 2(b)) as compared to a rear side end part 122. Thus, the curved part 118 is curved so as to gradually curve from back to front toward the occupant side.

FIG. 3 depicts a state of the sub-chamber 114 of FIG. 2(b) spread out on a flat surface. The sub-chamber 114 is formed by folding and overlapping a single panel member 126 and sewing this together with curved edges 116a and 116b.

If the sub-chamber 114 is formed on the left side in FIG. 3, the upper side thereof is formed by the upper area 126a of the panel member 126, and if the sub-chamber 114 is formed on the right side in FIG. 3, the lower side thereof is formed by the lower area 126b. A connecting part 132 that the external tether 124 (see FIG. 2(b)) connects to is provided at the front of the lower area 126.

A connecting area 128 is formed at the center of the panel member 126. The connecting area 128 is an area for connecting to the main panel 112a (see FIG. 2(b)) and is formed in an oval shape across the center of the panel member 126.

A plurality of gas receiving openings 130a to 130d are provided in the connecting area 128. The gas receiving openings 130a to 130d are connected to the main panel 112a (see FIG. 2(a)) and receive gas flowing from the main chamber 112.

The sub-chamber 114 uses the gas receiving openings 130a to 130d to receive gas from the main chamber 112 for expansion and deployment. In other words, gas from the inflator 110 is first supplied to the main chamber 112 and then the gas is supplied through the main chamber 112 to the sub-chamber 114. This configuration enables the main chamber 112 and the sub-chamber 114 to suitably expand and deploy using gas from the inflator 110.

FIG. 4 is a diagram depicting the airbag module 106 in FIG. 1(b) from various directions. FIG. 4(a) is a schematic view of the airbag module 106 of FIG. 1(b) as viewed from above.

The airbag module 106 is mounted to the side frame 134 of the seatback 104 (see FIG. 1(b)) on the interior side in the vehicle width direction. Furthermore, the main chamber 112 expands and deploys from the side frame 134 to the side of the occupant 136 (see FIG. 5(a)) seated in the seat 102.

A first virtual plane S1 illustrated in FIG. 4 is a plane that, of the side frame 134, spreads up and down and towards the front and back of the outer surface of the seatback 104 in the width direction (see FIG. 1(b)). The main chamber 112 expands and deploys along this first virtual plane S1, in other words up and down and towards the front and back parallel to the first virtual plane S1. By means of this deployment behavior along the first virtual plane S1, the main chamber 112 is able to suitably expand and deploy broadly to the side of the occupant 136 (see FIG. 5(a)) seated in the seat 102.

FIG. 4(b) is a schematic view of the airbag module 106 of FIG. 1(b) as viewed from the front. The sub-chamber 114 expands and deploys protruding from the main chamber 112 and to the occupant side. Here, the sub-chamber 114 expands and deploys along a second virtual plane S2 that intersects with the first virtual plane S1. The second virtual plane S2 is a plane that is orthogonal to the first virtual plane S1 and in the present embodiment, preferably spreads in a horizontal direction orthogonal to the vertical direction. This deployment behavior along the second virtual plane S2 enables the sub-chamber 114 to be suitably supported by the main chamber 112. Note that the spread direction of the plane S2 is not limited to the horizontal direction but also may spread in a direction inclined with respect to the horizontal direction.

As described above, the sub-chamber 114 expanding and deploying along the second virtual plane S2 intersecting with the main chamber 112 enables loads applied to the sub-chamber 114 to efficiently be received by the main chamber 112 and thus enables the airbag cushion 108 to suitably restrain the occupant 136. In particular, the sub-chamber 114 expands and deploys orthogonally to the main chamber 112 so even if the sub-chamber 114 is pushed in by the occupant 136, this load can efficiently be absorbed by the main chamber 112. Thus, with this side airbag device 100, restraint of the occupant 136 without release from the range of the airbag cushion 108 is feasible.

A horizontally extending side 124a of the external tether 124 is connected to the front edge of the sub-chamber 114. Furthermore, a vertically extending side 124b is connected to an edge of a portion of the main chamber 112 that is above the sub-chamber 114 and stretches from an upper side to a front side of the main chamber 112.

When the airbag cushion 108 expands and deploys, the external tether 124 is able to pull the front side of the sub-chamber 114 diagonally upward toward the main chamber 112. By pulling the sub-chamber 114 toward the main chamber 112 for support, the external tether 124 stabilizes the behavior of the sub-chamber 114 when the airbag cushion 108 expands and deploys, retains the orientation of the deployed sub-chamber 114, and thereby enables the sub-chamber 114 to efficiently restrain the occupant.

FIG. 5 is a diagram depicting the side airbag device 100 of FIG. 1(b) and an occupant 136. FIG. 5(a) depicts the side airbag device 100 from the front of the seat 102. The occupant 136 in FIG. 5(a) is depicted as a test dummy doll AM50 which imitates a physique (height of 175 cm and weight of 78 kg) suitable for 50% of average US adult males.

As described above, the main chamber 112 expands and deploys to the side of the occupant 136. Furthermore, the sub-chamber 114 is provided on the occupant side of the main chamber 112 and is positioned so that upon expansion and deployment, the lower area 126 thereof is above the height of a shoulder 138 of the occupant 136. With this configuration, the sub-chamber 114 is able to restrain the head 140 of the occupant 136.

FIG. 5(b) depicts the side airbag device 100 from above the seat 102. Utilizing the curved part 118, the sub-chamber 114 is able to contact the head 140 of the occupant 136 from the side to the front. Restraint of the head 140 of the occupant 136 by the curved part 118 of the sub-chamber 114 prevents forward movement on the far side and suppresses rotation around the neck.

With the airbag cushion 108 described above, an edge 116 of the sub-chamber 114 on the occupant side is curved and recessed, and is thereby able to provide restraint along the body of the occupant 136. In addition, with the configuration described above, the sub-chamber 114 is broadly supported by the main chamber 112 enabling efficient absorption of energy when restraining the occupant. Therefore, for example, with the configuration described above, the head 140 of the occupant 136 can be restrained using the sub-chamber 114. Rotational behavior of the head 140 is known to raise injury value; therefore, the configuration described above suppressing rotational behavior of the head 140 using the sub-chamber 114 enables preferable reduction of the injury value of the occupant 136 with a simple configuration.

As depicted in FIG. 4(a), with the present embodiment, the airbag module 106 is assembled to the outside of the side frame 134, but this airbag module 106 can also be assembled to the inside of the side frame 134. With this configuration as well, the occupant 136 (see FIG. 5(a)) can be preferably restrained using the airbag cushion 108.

In addition, in the present embodiment, the description is provided based on the airbag cushion 108 being provided on the far side of the seatback 104. Providing of the airbag cushion 108 on the far side of the seatback 104 enables suitable restraint of the occupant 136 moving to the far side during a collision. However, of course the airbag cushion 108 can be provided on the near side of the seatback 104 and in this case as well the main chamber 112 and the sub-chamber 114 can be used to suitably restrain the occupant 136 (see FIG. 5(a)).

### Modified Example

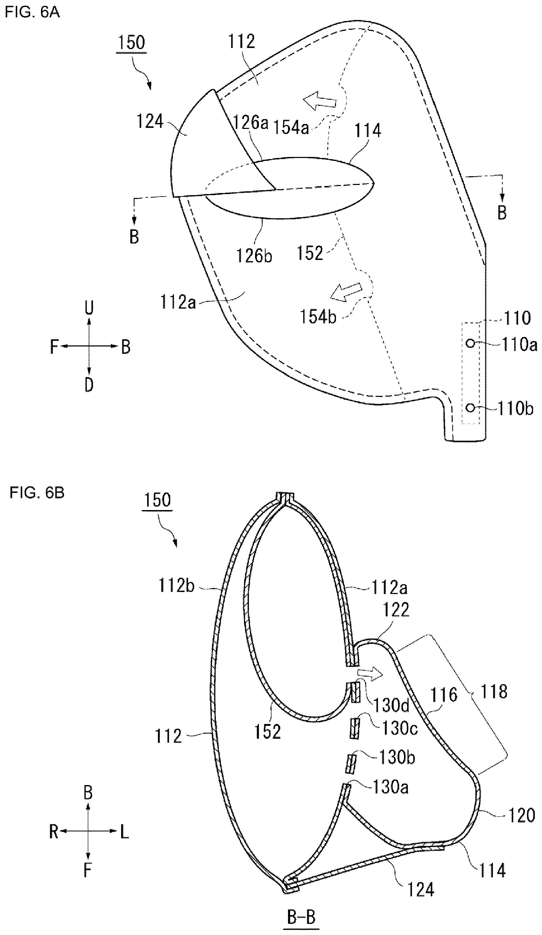

FIG. 6 is a diagram depicting Modified Example 1 of the airbag cushion 108 in FIG. 2 (airbag cushion 150). In FIGS. 6 and on, the same symbols are given to the same constituent elements as those described above, whereby description of the aforementioned constituent elements is omitted. In the following description, components having the same name as a component already described are assumed to have the same function unless otherwise specified, even if marked with a different sign.

FIG. 6(a) is a diagram depicting an airbag cushion 150 corresponding to FIG. 2(a). The configuration of the airbag cushion 150 differs from that of the airbag cushion 108 in FIG. 2(a) in having an inner tube 152 inside.

The inner tube 152 is a member provided inside the main chamber 112 for streamlining gas flow and the gas discharge opening of the inflator 110 is inserted to the inside. The inner tube 152 includes a plurality of inner vents 154a to 154c (see FIG. 6(b)) for discharging gas received from the inflator 110. Of these, inner vents 154a and 154b are provided on the upper side and lower side of the inner tube 152 and discharge gas inside the main chamber 112.

FIG. 6(b) is a cross-sectional view of the airbag cushion 150 in FIG. 6(a) along B-B. Of the plurality of inner vents of the inner tube 152, the inner vent 154c is connected to the sub-chamber 114. With this configuration of the airbag cushion 150, the inner tube 152 is used to supply gas directly to the sub-chamber 114, thereby enabling restraint of the occupant 136 through rapid expansion and deployment of the sub-chamber 114.

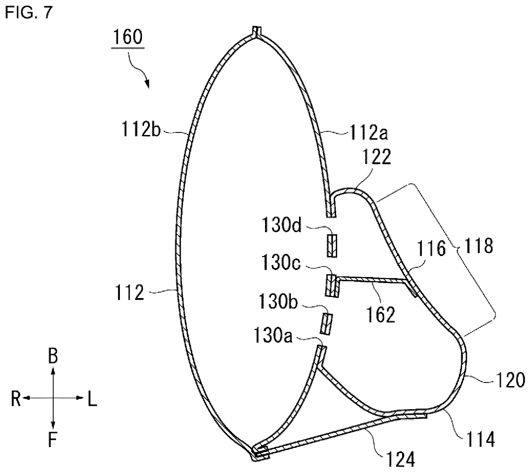

FIG. 7 is a diagram depicting Modified Example 2 of the airbag cushion 108 in FIG. 2(b) (airbag cushion 160). The airbag cushion 160 includes an internal tether 162 inside the sub-chamber 114.

The internal tether 162 passes over the curved part 118 of the sub-chamber 114 to the main chamber 112. The internal tether 162 pulls the curved part 118 to the main chamber 112 and has a function of maintaining the shape of the curved part 118. With this configuration, the airbag cushion 160 is able to suitably restrain the occupant 136 using the curved part 118.

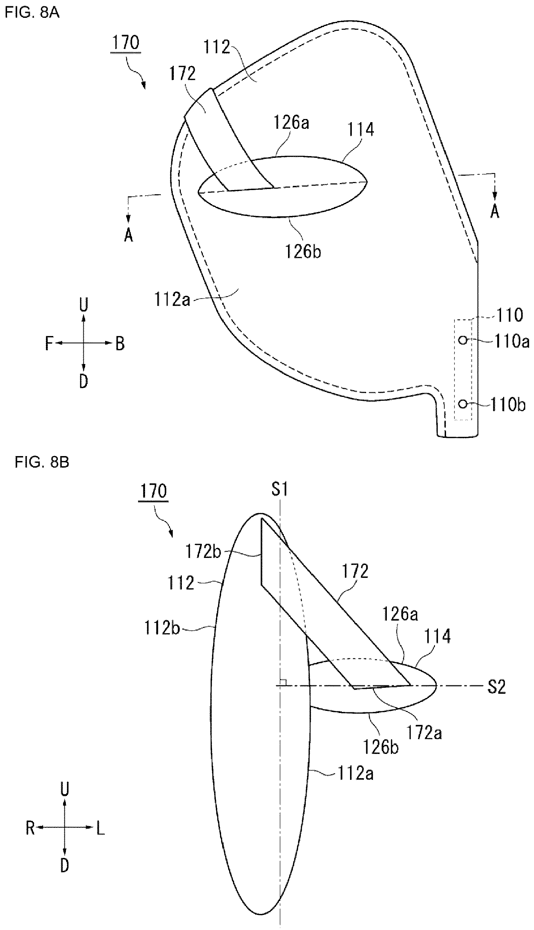

FIG. 8 is a diagram depicting Modified Example 3 of the airbag cushion 108 in FIG. 2 (airbag cushion 170). FIG. 8(a) is a diagram depicting an airbag cushion 170 corresponding to FIG. 2(a). The configuration of the airbag cushion 170 differs from that of the airbag cushion 108 of FIG. 2(a) in a shape of an external tether 172.

Similar to the external tether 124 of FIG. 2(a), the external tether 172 passes over the front of the main chamber 112 to the front of the sub-chamber 114.

FIG. 8(b) is a diagram depicting the airbag cushion 170 corresponding to FIG. 4(b). The external tether 172 is shaped in a band extending diagonally, omitting the corners of the external tether 124 (FIG. 4(b)). A horizontally extending side 172a of the external tether 172 is connected to the front edge of the sub-chamber 114. Furthermore, a vertically extending side 172b is connected to an edge of a portion of the main chamber 112 that is above the sub-chamber 114 and stretches from the upper side to the front side of the main chamber 112.

When the airbag cushion 108 expands and deploys, the external tether 172 is able to pull the front side of the sub-chamber 114 diagonally upward toward the main chamber 112. By pulling the sub-chamber 114 toward the main chamber 112 for support, the external tether 172 stabilizes the behavior of the sub-chamber 114 when the airbag cushion 108 expands and deploys, retains the orientation of the deployed sub-chamber 114, and thereby enables the sub-chamber 114 to efficiently restrain the occupant.

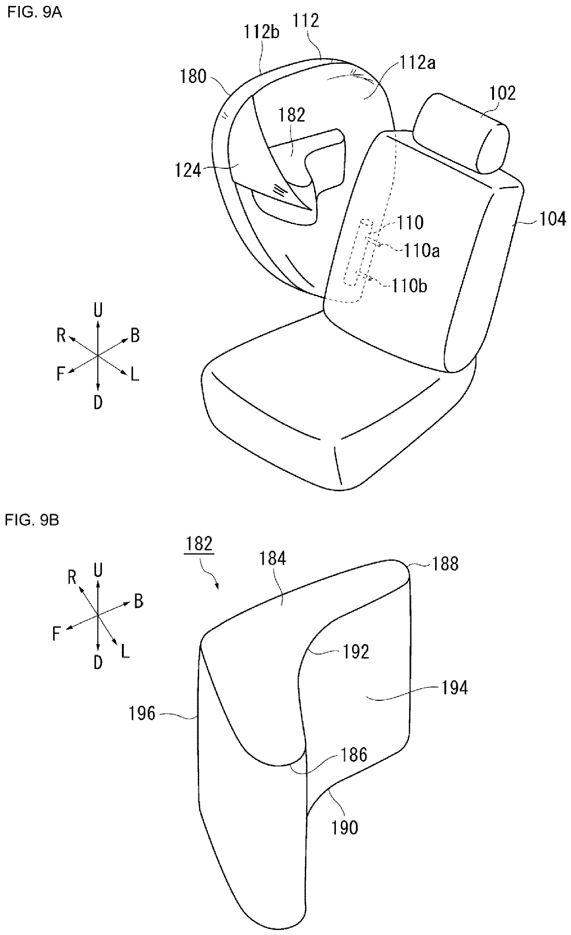

FIG. 9 is a diagram depicting Modified Example 4 of the airbag cushion 108 in FIG. 2 (airbag cushion 180). FIG. 9(a) is a diagram depicting the airbag cushion 180 corresponding to FIG. 1(b). The configuration of the airbag cushion 180 differs from that of the airbag cushion 108 of FIG. 1(b) in a shape of a sub-chamber 182.

FIG. 9(b) is a perspective view depicting only the sub-chamber 182 of FIG. 9(a). Compared to the sub-chamber 114 of FIG. 1(b), the sub-chamber 182 is thicker in the vertical direction and has a somewhat angular shape.

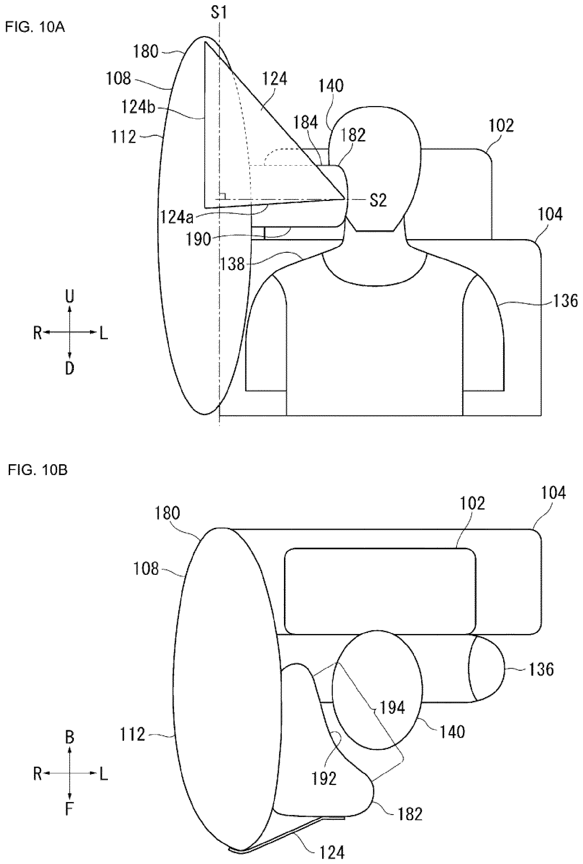

An upper surface 184 of the sub-chamber 182 has a shape where a front side end part 186 protrudes more toward the occupant side (see FIG. 10(a)) than a rear side end part 188. A lower surface 190 has the same shape as the upper surface 184. Thus the sub-chamber 182 is formed with a curved edge 192 that gradually wraps around to the front of the passenger from the back side to the front side.

A curved edge surface 194 is formed along an edge 192 on the side surface of the sub-chamber 182 overall curved toward the main chamber 112 as a curved surface with a breadth in the vertical direction. The sub-chamber 182 restrains the occupant 136 (see FIG. 10(a)) using this curved edge surface 194. Of the side surfaces of the sub-chamber 182, the side opposite the curved edge surface 192 is a connecting surface 196 for connecting to the main panel 112a of the main chamber 112 (see FIG. 9(a)).

The sub-chamber 182 can be formed of a panel that forms the upper surface 184, a panel that forms the lower surface 190, and panels that form side surfaces including the curved edge surface 192 and the connecting surface 196.

FIG. 10 is a diagram depicting the airbag cushion 180 corresponding to FIG. 5. FIG. 10(a) is a diagram depicting the airbag cushion 180 corresponding to FIG. 5(a).

The sub-chamber 182 is provided at a position such that the lower surface 190 thereof is above the height of the shoulder 138 of the occupant 136 when expanded and deployed. With this configuration, the sub-chamber 182 is able to restrain the head 140 of the occupant 136.

FIG. 10(b) is a diagram depicting the airbag cushion 180 corresponding to FIG. 5(b). Utilizing the curved edge surface 194 that forms the curved edge 192 when viewed from above, the sub-chamber 182 is able to make contact with the head 140 of the occupant 136 over a broad area from the side to the front. Restraint of the head 140 of the occupant 136 by the curved edge surface 194 of the sub-chamber 182 prevents forward movement on the far side and suppresses rotation around the neck.

With the airbag cushion 180 described above, the edge 192 of the sub-chamber 182 on the occupant side is curved and recessed, and is thereby able to provide restraint along the body of the occupant 136. In particular, a curved edge surface 194 is formed in the sub-chamber 182, and the curved edge surface 194 is used to make broad surface contact with the head 140 and the like of the occupant 136, and is thereby able to efficiently absorb energy when restraining the occupant. In this manner, utilizing the sub-chamber 182, the airbag cushion 180 is also able to suppress rotational behavior of the head 140 and thereby suitably reduce injury value of the occupant 136 with a simple configuration.

Similar to the sub-chamber 114 of FIG. 4(b), the sub-chamber 182 also expands and deploys protruding from the main chamber 112 toward the occupant side along the second virtual plane S2 that intersects with the first virtual plane S1. For the airbag cushion 180 as well, the sub-chamber 182 expands and deploys orthogonal to the main chamber 112; therefore, even if the sub-chamber 182 is pushed in by the occupant 136, the load thereof can efficiently be absorbed by the main chamber 112.

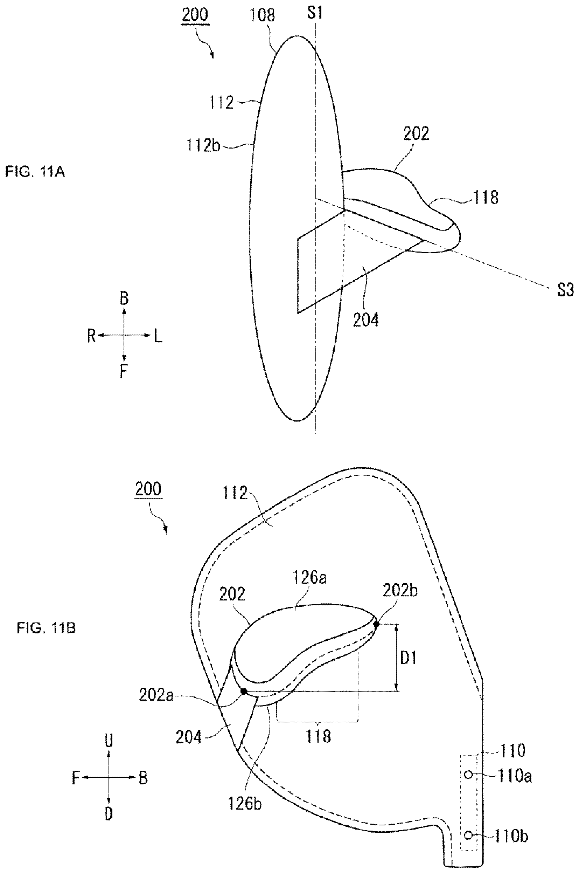

FIG. 11 is a diagram depicting Modified Example 5 of the airbag cushion 108 in FIG. 2 (airbag cushion 200). FIG. 11(a) is a diagram depicting the airbag cushion 200 corresponding to FIG. 4(b). The configuration of the airbag cushion 200 differs from that of the airbag cushion 108 of FIG. 4(b) in a shape of a sub-chamber 202.

The sub-chamber 202 uses an external tether 204 to achieve an orientation inclined diagonally downwards. In detail, the external tether 204 passes from the front of the sub-chamber 202 to an area on the front of the main chamber 112 lower than the sub-chamber 202, pulling the sub-chamber 202 forward and downward.

By means of the external tether 204, the sub-chamber 202 expands and deploys along the second virtual plane S2 that intersects with the first virtual plane S1 at an incline. This second virtual plane S3 spreads inclined downward on the occupant 136 side (see FIG. 5(a)) relative to the first virtual plane S1. Being oriented along this second virtual plane S3 and supported by the main chamber 112, the sub-chamber 202 is able to come into contact with the head 140 of the occupant 136 inclined from above.

FIG. 11(b) is a diagram depicting the airbag cushion 200 corresponding to FIG. 2(a). The sub-chamber 202 is inclined downward from the back to the front such that a front end portion 202a of the sub-chamber 202 in the front-to-back direction of the seat 102 (see FIG. 1(b)) is positioned lower than the rear end portion 202b in the vertical direction by a distance D1. Therefore, the curved part 118 is also formed inclined downward from the back to the front.

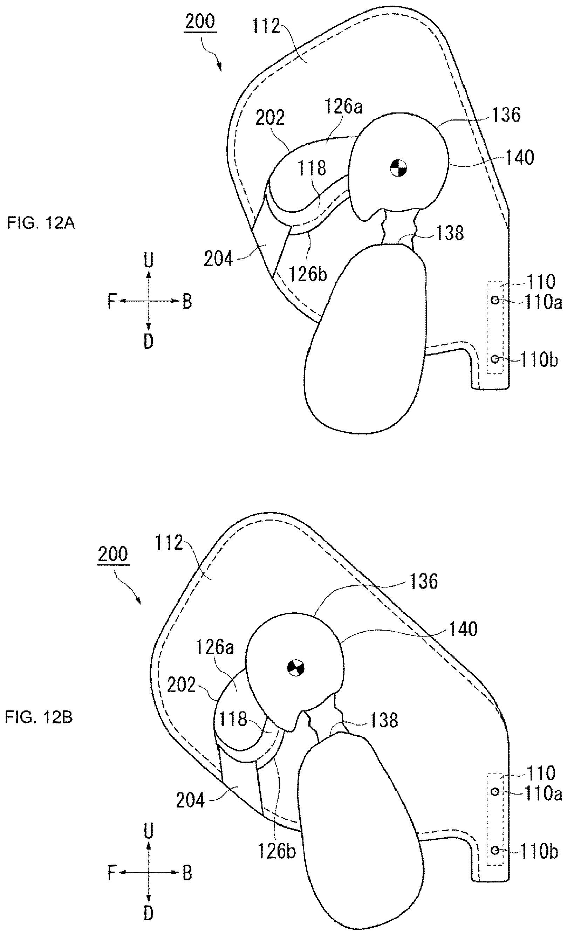

FIG. 12 is a diagram depicting the airbag cushion 200 of FIG. 11(b) and an occupant 136. FIG. 12(a) depicts the airbag cushion 200 and the occupant 136 seated in a regular position from inside the vehicle.

The sub-chamber 202 is also provided on the occupant side of the main chamber 112 and is positioned so that upon expansion and deployment, the lower area 126 thereof is above the height of the shoulder 138 of the occupant 136. With this configuration, the sub-chamber 202 is able to restrain the head 140 of the occupant 136.

FIG. 12(b) is a diagram depicting a state of the occupant 136 of FIG. 12(a) having moved in an emergency. In an emergency, the torso of the occupant 136 readily falls forward centered on the waist; thereby, the head 140 also readily moves forward and downward.

As described above, the sub-chamber 202 protrudes inclined downward in the left-to-right direction of the seat 102 (see FIG. 1(b)) from the main chamber 112 on the occupant 136 side and is also inclined downward in the front-to-back direction from the back to the front. With this manner of configuration, the sub-chamber 202 comes into contact with the head 140 of the occupant 136 from above enabling a behavior of the front of the curved part 118 falling in front of and capturing the head 140.

With the configuration of the present Modified Example, the sub-chamber 202 is below the occupant side and inclined downward to the front and so the head 140 of the occupant 136 can be restrained by the sub-chamber 202 before and after movement of the occupant 136 during an emergency. In particular, utilizing the curved part 118, the sub-chamber 202 is able to come into contact with the head 140 of the occupant 136 from the side to the front and thereby is suitably able to suppress rotation of the head 140 around the neck. Therefore, with this modified example, injury value of the occupant 136 can be suitably reduced by suppressing rotational behavior of the head 140 of the occupant 136 with a simple configuration.

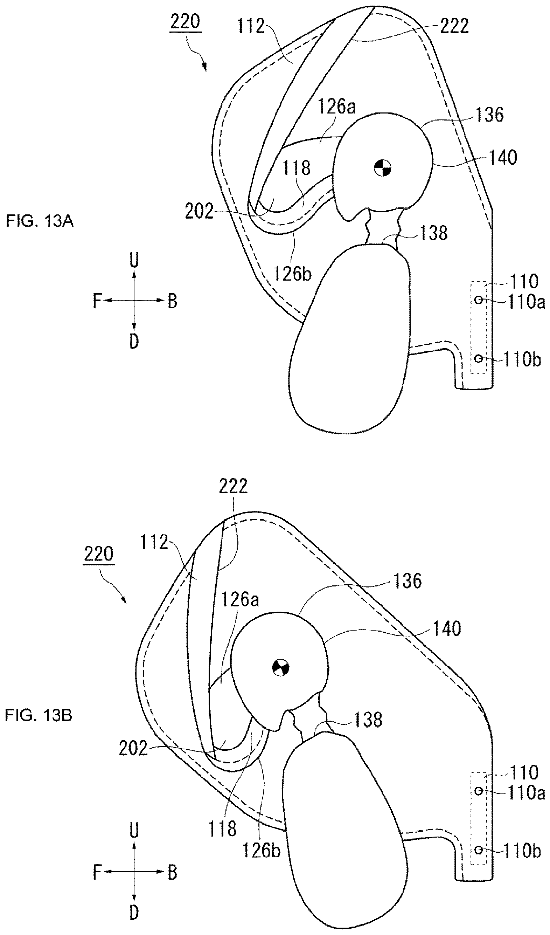

FIG. 13 is a diagram depicting Modified Example 6 of the airbag cushion 108 in FIG. 2 (airbag cushion 220). FIG. 13(a) is a diagram depicting the airbag cushion 220 corresponding to FIG. 12(a). The configuration of the airbag cushion 220 differs from that of the airbag cushion 200 of FIG. 12(a) in a configuration of an external tether 222.

The external tether 222 passes from the front of the sub-chamber 202 to an area of the main chamber 112 above and behind the sub-chamber 202.

By providing the sub-chamber 202 with, for example, the connecting area 128 (see FIG. 3) biased to the lower area 126b side and connected such that the connecting area 128 is lowered to the front side relative to the main chamber 112, the sub-chamber can protrude from the main chamber 112 inclined downward to the occupant 136 side, and is thereby sloped in the front-to-back direction from the back to the front without relying on the external tether 204 (see FIG. 12(a)).

FIG. 13(b) is a diagram depicting a state of the occupant 136 of FIG. 13(a) having moved in an emergency. The front side of the curved part 118 of the sub-chamber 202 receives the front of the head 140 falling forward. Here, the external tether 222 pulls the sub-chamber 202 diagonally upward to the rear and enables absorbing the load of the head 140.

With the configuration of the present Modified Example, the front of the head 140 of the occupant 136 is restrained using the inclined sub-chamber 202 so the load at that time can be efficiently absorbed by the external tether 222. Therefore, with this modified example, injury value of the occupant 136 can be suitably reduced by suppressing rotational behavior of the head 140 of the occupant 136 with a simple configuration.

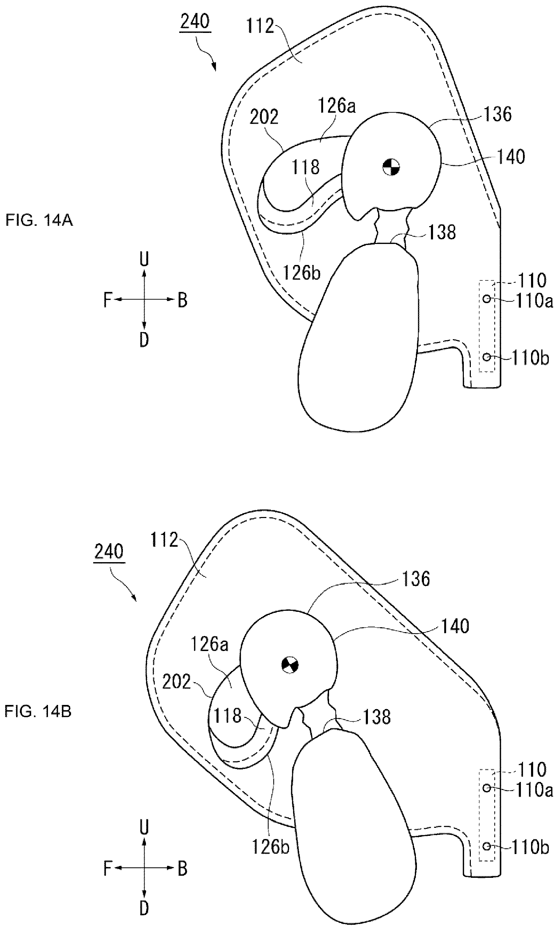

FIG. 14 is a diagram depicting Modified Example 7 of the airbag cushion 108 in FIG. 2 (airbag cushion 240). FIG. 14(a) is a diagram depicting the airbag cushion 240 corresponding to FIG. 13(a). The configuration of the airbag cushion 240 differs from that of the airbag cushion 220 of FIG. 13(a) in that the external tether 222 is omitted.

As described above, by providing the sub-chamber 202 with, for example, the connecting area 128 (see FIG. 3) biased to the lower area 126b side and connected such that the connecting area 128 is lowered to the front side relative to the main chamber 112, the sub-chamber can protrude from the main chamber 112 inclined downward to the occupant 136 side, and is thereby sloped in the front-to-back direction from the back to the front without relying on the external tether 204 (see FIG. 12(a)).

FIG. 14(b) is a diagram depicting a state of the occupant 136 of FIG. 14(a) having moved in an emergency. The front side of the curved part 118 of the sub-chamber 202 receives the front of the head 140 falling forward. Here, the inclined sub-chamber 202 is able to restrain the head 140 of the occupant 136 without relying on the external tether 222 (see FIG. 13(b)). Therefore, with this modified example, injury value of the occupant 136 can be suitably reduced by suppressing rotational behavior of the head 140 of the occupant 136 with a simple configuration.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person of ordinary skill in the art can conceive various changed examples or modified examples within the scope described in the scope of the claims, which is understood to naturally belong to the technical scope of the present invention.

### INDUSTRIAL APPLICABILITY

The present invention can be used in an occupant restraining device for restraining an occupant seated in a seat of a vehicle.

### EXPLANATION OF CODES

100. Side airbag device, 102. Seat, 104. Seatback, 106. Airbag module, 108. Airbag cushion, 110. Inflator, 110a, 110b. Stud bolts, 112. Main chamber, 112a. Main panel, 112b. Main panel, 114. Sub-chamber, 116. Edge, 116a, 116b. Edge, 118. Curved part, 120. End part, 122. End part, 124. External tether, 124a, 124b. Edge, 126. Panel member, 126a. Upper area, 126b. Lower area, 128. Connecting area, 130a, 130b, 130c, 130d. Gas receiving opening, 132. Connecting part, 134. Side frame, 136. Occupant, 138. Shoulder, 140. Head, 150. Airbag cushion, 152. Inner tube, 160. Airbag cushion, 162. Internal tether, S1. First virtual plane, S2. Second virtual plane, 170. Airbag cushion, 172. External tether, 172a, 172b. Edge, 180. Airbag cushion, 182. Sub-chamber, 184. Upper surface, 186, 188. End part, 190. Lower surface, 192. Edge, 194. Curved edge surface, 200. Airbag cushion, 202. Sub-chamber, 202a. Front end portion, 202b. Rear end portion, 204. External tether, D1. Distance, S3. Plane, 220. Airbag cushion, 222. External tether, 240. Airbag cushion,

## Claims

1. A vehicular side airbag device having an airbag module mounted in a side frame of a vehicle seat seatback, wherein
the airbag module includes:
an airbag cushion in a bag shape with a prescribed rolled or folded storage configuration, and
an inflator for supplying gas to the airbag cushion;
the airbag cushion includes:
a main chamber that expands and deploys from the side frame to the side of the occupant seated in the vehicle seat, and
a sub-chamber that expands and deploys protruding from the main chamber toward the occupant side; and
an edge of the sub-chamber on the occupant side is curved and is concave towards the main chamber.

2. The vehicular side airbag device according to claim 1, wherein
the main chamber expands and deploys from the side frame spreading vertically and to the front and back along a first virtual plane, and
the sub-chamber expands and deploys along a second virtual plane that intersects with the first virtual plane.

3. The vehicular side airbag device according to claim 2, wherein the second virtual plane is orthogonal to the first virtual plane.

4. The vehicular side airbag device according to any one of claims 1 to 3, wherein the edge of the sub-chamber on the occupant side is formed by a curved surface that is concave towards the main chamber.

5. The vehicular side airbag device according to any one of claims 1 to 3, wherein the airbag cushion further includes a tether that passes from a portion of the main chamber above the sub-chamber to the sub-chamber.

6. The vehicular side airbag device according to any one of claims 1 to 3, wherein the main chamber expands and deploys by receiving gas from the inflator and the sub-chamber expands and deploys by receiving gas from the main chamber.

7. The vehicular side airbag device according to any one of claims 1 to 3, wherein
the airbag cushion further includes an inner tube inside the main chamber, into which the inflator is inserted,
the inner tube includes a plurality of inner vents for discharging gas received from the inflator, and
at least one of the plurality of inner vents is connected to the sub-chamber.

8. The vehicular side airbag device according to claim 1 or 2, wherein the sub-chamber is inclined from the back to the front so that a front end portion of the sub-chamber is positioned lower than a rear end portion in the front-to-back direction of the vehicle seat.
